# DEMANDE DE BREVET EUROPEEN

(11) **EP 1 156 684 A1**
(43) Date de publication de la demande: **21.11.2001**
(21) Numéro de dépôt: 01401189.4
(22) Date de dépôt: 10.05.2001
(51) Int. Cl.: H04Q 7/22

(54) **Procédé pour optimiser la mémorisation des informations dans un terminal mobile de radiocommunication et terminal pour mettre en oeuvre ce procédé**

(30) Priorité: 15.05.2000 FR 0006169
(71) Demandeur: ALCATEL, 75008 Paris (FR)
(72) Inventeur: Vermelle, Eric, 92700 Colombes (FR); Hubbe, Pascal, 75014 Paris (FR); Barbet, Franck, 13600 la Ciotat (FR)
(74) Mandataire: Lamoureux, Bernard

(57) **Abrégé**

L'invention concerne un procédé d'optimisation d'une mémoire externe et/ou interne d'un terminal de radiocommunication, dans laquelle est mémorisée au moins une information reçue par ce terminal, à laquelle est associé à demeure au moins un indicateur représentatif du type effaçable de ladite information, caractérisé en ce que, pour une information effaçable (115), l'information est effacée automatiquement (135) en fonction de la consultation de ladite information par l'utilisateur (130).

## Description

La présente invention concerne un procédé d'optimisation de la mémorisation des informations dans un terminal de radiocommunication. L'invention concerne également un terminal de radiocommunication mettant en oeuvre ce procédé.

Un des domaines d'application non exclusif de l'invention est celui des téléphones mobiles fonctionnant dans des réseaux de radiocommunication. Ces appareils ont des capacités limitées de mémorisation des informations qu'ils reçoivent. Actuellement, seulement une vingtaine d'informations reçues peuvent être mémorisées dans une mémoire externe, telle qu'une carte SIM (SIM pour Subscriber Identity module en anglais, module d'identité de l'abonné). Cette limitation peut provenir du dimensionnement global de l'appareil par rapport aux ressources nécessaires à la mémorisation d'un nombre d'informations supérieur à une vingtaine. Un but de l'invention est d'optimiser la mémorisation des informations dans la mémoire externe du téléphone mobile afin d'en limiter la saturation et sans l'intervention nécessaire de l'utilisateur. L'invention n'est pas limitée à l'optimisation d'une mémoire externe, mais s'applique également à l'optimisation d'une mémoire intenre d'un téléphone mobile.

Dans le système GSM (Groupe Spécial Mobile), ces informations sont des messages écrits courts, dits messages SMS (SMS pour Short Message Service en anglais, service de message court). En utilisant le clavier alphanumérique du téléphone mobile, l'utilisateur de ce téléphone écrit un message SMS et l'envoi à l'utilisateur d'un autre téléphone mobile via un service de gestion des messages courts implémenté dans le réseau GSM, le SMSC (SMSC pour Short Message Service Center, centre de gestion des messages SMS). L'utilisateur peut également recevoir des messages d'ordre général émis directement par le réseau de l'utilisateur. D'autre part, un octet de type DCS (Data Coding Scheme en anglais, schéma de codage des données) est associé au message SMS par le téléphone mobile émetteur ou par le SMSC directement. Cet octet DCS est composé de plusieurs bits contenant, entre autres, des indications sur le codage des données du message SMS, sur l'expéditeur et sur le destinataire. Avec ces indications, le téléphone mobile récepteur sait comment il doit interpréter le message reçu et l'afficher sur son écran d'affichage. Les spécifications pour le SMS sont décrites dans le ETSI/TL GSM recommandations 03.40. Selon ces standards, un message SMS peut contenir au maximum 160 caractères. Un message SMS est reçu par le téléphone mobile sans contrôle de l'utilisateur, à condition que le téléphone soit connecté à son réseau de radiocommunication. Si ce dernier n'est pas connecté, alors le message SMS reste stocké dans le SMSC et le HLR (HLR pour Home Location Register, enregistreur de localisation nominal) lié au téléphone est averti de la présence du message SMS en attente dans le SMSC. Lorsque l'utilisateur demande la connexion de son téléphone, le HLR est averti de cette demande via la station de base la plus proche, procède à la connexion et envoie un signal au SMSC. Le SMSC envoie alors le message SMS au téléphone mobile. Ce message SMS est alors mémorisé dans le téléphone mobile en attendant que l'utilisateur du téléphone le consulte.

Dans l'état de la technique, notamment dans le document WO 95/06996, après la lecture du message SMS par l'utilisateur, celui-ci a le choix de garder ce message SMS dans la mémoire externe située dans la carte SIM du téléphone mobile, ou de garder ce message dans la mémoire interne du téléphone mobile, ou d'effacer le message pour libérer de la place mémoire. La technique divulguée dans ce document présente l'inconvénient que la gestion de la place mémoire du téléphone est laissée au bon vouloir de l'utilisateur. Si celui-ci oublie de détruire régulièrement les messages de moindres importances ou de transférer ces messages d'une mémoire vers l'autre, alors la mémoire externe saturée ne pourra plus accepter un nouveau message.

Dans l'état de la technique, notamment dans le document EP 0 858 238 A2, lors de la mémorisation du message SMS reçu par le téléphone mobile, plusieurs octets sont associés au message SMS et plus précisément un octet appelé Status. Cet octet Status est associé au message SMS en recopiant uniquement les données de l'octet DCS nécessaires à la gestion du message SMS par la carte SIM. Cet octet STATUS contient, entre autres, des indications sur l'identité de l'expéditeur du message SMS, et sur le fait que le message est du type Replace ou non. Si le message entrant est du type Replace et si un message du même type Replace envoyé par le même expéditeur était déjà mémorisé dans la carte SIM, alors le nouveau message est mémorisé à la place de l'ancien. Sinon, le message est mémorisé dans une des places mémoires vides dans la carte SIM et est traité comme décrit dans le paragraphe précédent. Cependant, cette solution présente deux inconvénients majeurs. Tout d'abord, si l'utilisateur n'a pas eu le temps de lire un message de type Replace mémorisé et qu'un autre message du type Replace envoyé par le même expéditeur se présente, alors le nouveau message sera mémorisé à la place du précédent sans que l'utilisateur du téléphone n'ait pris connaissance du contenu du premier message. Deuxièmement, si l'utilisateur du téléphone oublie d'effacer les messages les moins importants, alors la mémoire de la carte SIM va être saturée et ne pourra recevoir que des messages de type Replace envoyé par un expéditeur ayant déjà envoyé un message de ce type.

L'invention a pour but de pallier ces inconvénients et de procéder notamment à une meilleure gestion des messages SMS dans une mémoire externe et/ou interne d'un terminal sans l'intervention de l'utilisateur et sans effacer automatiquement des messages non lus.

A cet effet, l'invention propose un procédé d'optimisation d'une mémoire externe et/ou interne d'un terminal de radiocommunication, dans laquelle est mémorisée au moins une information reçue par ce terminal, à laquelle est associé à demeure au moins un indicateur représentatif du type effaçable de ladite information, caractérisé en ce que, pour une information effaçable, l'information est effacée automatiquement en fonction de la consultation de ladite information par l'utilisateur.

En particulier, le procédé est caractérisé en ce que l'information est du type SMS.

Avantageusement, le procédé dans lequel l'information est émise par un utilisateur d'un autre terminal, est caractérisé en ce que l'étape consistant à associer à demeure un indicateur représentatif d'un état de ladite information, est effectuée par cet utilisateur pour forcer l'effacement automatique de l'information mémorisée dans la mémoire du terminal récepteur après sa consultation par l'utilisateur du terminal récepteur.

De manière préférée, le procédé, dans lequel l'information est émise par un opérateur d'un réseau de radiocommunication, est caractérisé en ce que l'étape consistant à associer à demeure un indicateur représentatif d'un état de ladite information, est effectuée par l'opérateur pour forcer l'effacement automatique de l'information mémorisée dans la mémoire du terminal après sa consultation par l'utilisateur du terminal.

Avantageusement, le procédé, pour un terminal de radiocommunication comportant une mémoire interne et une mémoire externe, est caractérisé en ce que, si la mémoire externe est pleine, au moins une information non effaçable et qui n'a pas été consultée est transférée automatiquement dans la mémoire interne.

De manière préférée, le procédé pour un terminal de radiocommunication comportant une mémoire interne et une mémoire externe, est caractérisé en ce que, si une information est reçue alors que la mémoire externe est pleine, au moins une information non effaçable et qui n'a pas été consultée est transférée automatiquement dans la mémoire interne.

D'une autre manière avantageuse, le procédé pour un terminal de radiocommunication comportant une mémoire interne et une mémoire externe, est caractérisé en ce que, toute information non effaçable est automatiquement transférée dans la mémoire interne après qu'elle a été consultée.

Suivant un autre aspect, l'invention concerne un terminal de radiocommunication pour la mise en oeuvre du procédé décrit précédemment, comprenant une mémoire externe et/ou interne, caractérisé en ce qu'il comporte des moyens pour identifier un indicateur de type effaçable et des moyens pour effacer automatiquement une information effaçable reçue et mémorisée dans la mémoire du terminal en fonction de la consultation de ladite information par l'utilisateur du terminal.

Avantageusement, le terminal de radiocommunication comporte une mémoire externe située dans une carte SIM.

De manière préférée, le terminal de radiocommunication est caractérisé en ce qu'il comporte des moyens pour transférer automatiquement dans la mémoire interne des informations non effaçables lorsque la mémoire externe est pleine.

Le terminal de radiocommunication est également caractérisé en ce qu'il comporte des moyens pour transférer automatiquement dans la mémoire interne une information non effaçable et qui n'a pas été consultée, si une information est reçue alors que la mémoire externe est pleine.

Le terminal de radiocommunication est aussi caractérisé en ce qu'il comporte des moyens pour transférer automatiquement dans la mémoire interne une information non effaçable après qu'elle a été consultée.

D'autres caractéristiques ressortiront de la description détaillée qui suit en référence aux dessins annexés. Ces figures sont présentées à titre d'exemple nullement limitatif de l'invention. Les figures montrent :
- Figure 1 : représentation schématique d'un terminal de radiocommunication comportatn une mémoire externe et une mémoire interne,
- Figure 2 : représentation schématique d'une trame contenat un en-tête de type DCS et une information transmise par un réseau de radiocommunication et reçue par un terminal,
- Figure 3 : diagramme des étapes du procédé suivant un mode de réalisation de l'invention,
- Figure 4 : diagramme des étapes de gestion d'une information non-effaçable, suivant un premier mode de réalisation,
- Figure 5 : diagramme des étapes de gestion d'une information non-effaçable, suivant un deuxième mode de réalisation,
- Figure 6 : diagramme des étapes de gestion d'une information non-effaçable, suivant un troisième mode de réalisation.

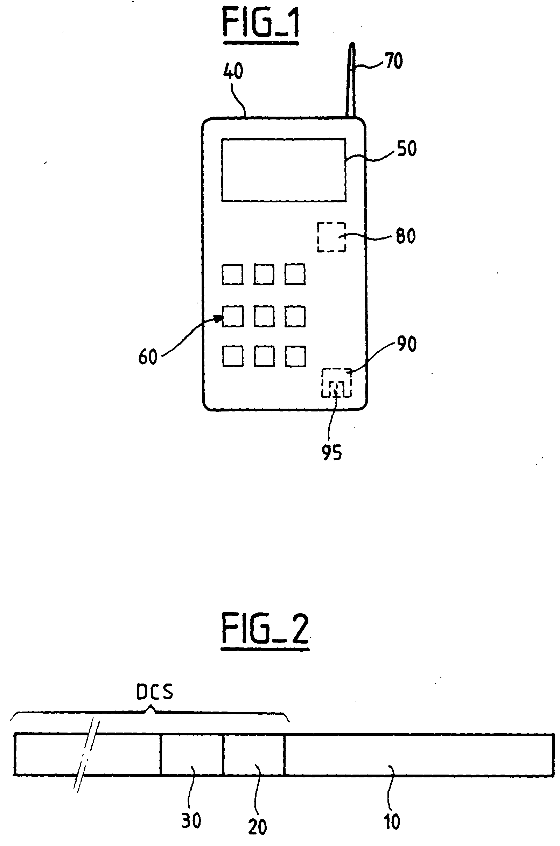

La figure 1 montre de manière schématique un terminal de radiocommunication comportant une mémoire externe et une mémoire interne.

Par terminal de radiocommunication 40, on pense de préférence à un téléphone mobile mais également à un pager avec des capacités de transmission et de réception d'informations ou plus généralement tout type de terminal destiné à transmettre et à recevoir des informations dans un réseau de radiocommunication.

Ce terminal de radiocommunication 40 est composé d'une interface de communication comprenant un écran 50 et un clavier 60, pour permettre à l'utilisateur de communiquer avec le terminal. Une antenne 70 permet d'émettre ou de recevoir des informations du réseau de radiocommunication. Dans le cas d'une information reçue, celle-ci est mémorisée, par l'exécution d'un programme par un processeur -non représenté- soit dans une mémoire interne 80, soit dans une mémoire externe 95 située dans une carte amovible de type SIM 90 appartenant à l'utilisateur du terminal (abonné). Ces deux mémoires 80 et 90 ne sont pas volatiles, et sont alimentées par une source d'énergie (non représenté) du terminal. Ainsi, les informations mémorisées ne sont pas détruites lorsque la source d'énergie est déconnectée du terminal.

La figure 2 montre une représentation schématique d'une trame comportant un octet de type DCS, formant en-tête, associé à une information transmise par un réseau de radiocommunication et reçue par un terminal. L'octet DCS est associé à l'information 10 par un terminal de radiocommunication émetteur de l'information 10 ou par l'opérateur du réseau de radiocommunication, émetteur direct de l'information 10 vers son abonné. Cet octet DCS comprend, entre autres,
- une donnée représentant un indicateur 20 représentatif du type effaçable de l'information, si l'utilisateur du terminal émetteur ou l'opérateur désire inclure cet indicateur dans le DCS,
- une autre donnée représentant l'état de la consultation 30 de l'information.

Dans le système GSM, l'information 10 peut être un message SMS, message court contenant au maximum 160 caractères. Cette information 10 peut également être un fichier audio, un fichier vidéo ou un fichier multimédia, et plus généralement tout type d'information reçue ou transmise par un terminal de radiocommunication.

Le système GSM est donné à titre d 'exemple d'application de la présente invention. Cette invention peut s'appliquer à d'autres systèmes de terminaux de radiocommunication qui utilisent des cartes amovibles de type SIM et peuvent recevoir ou transmettre des informations.

Quant à l'octet de type DCS, il est clair que nous entendons par octet de type DCS n'importe quel multiplet ou autre message qui serait associé à l'information et qui comprendrait, entre autres, un indicateur représentatif du type effaçable de l'information.

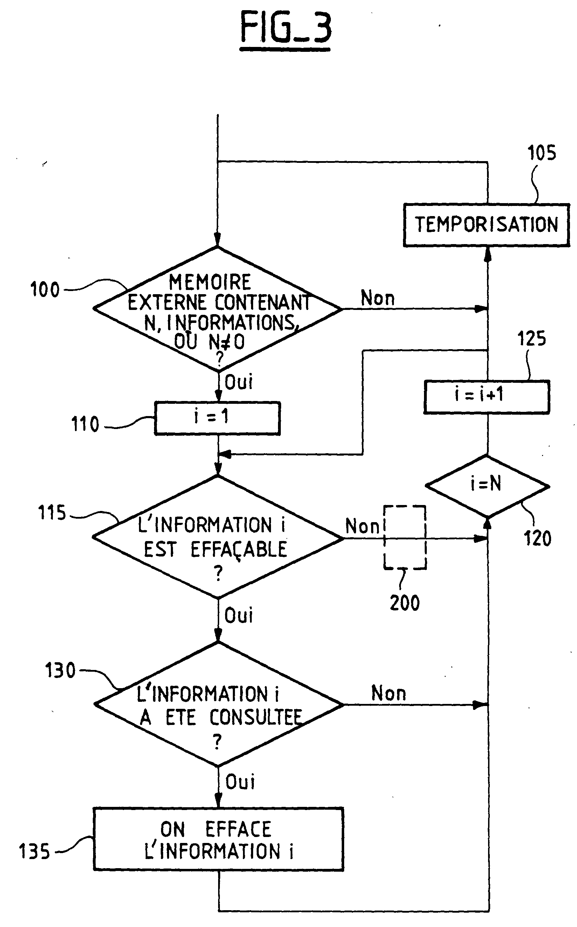

La figure 3 montre un diagramme des étapes du procédé suivant un mode de réalisation de l'invention.

A l'étape 100, on détermine le nombre d'informations N que contient la mémoire externe. Par mémoire externe, on entend une mémoire contenue dans une carte amovible de type SIM.

Si N=0, alors on effectue une étape 105 de temporisation puis on détermine à nouveau si la mémoire externe a reçu un message entre temps.

Si N≠0, alors on initialise un compteur i à 1 au cours d'une étape 110.

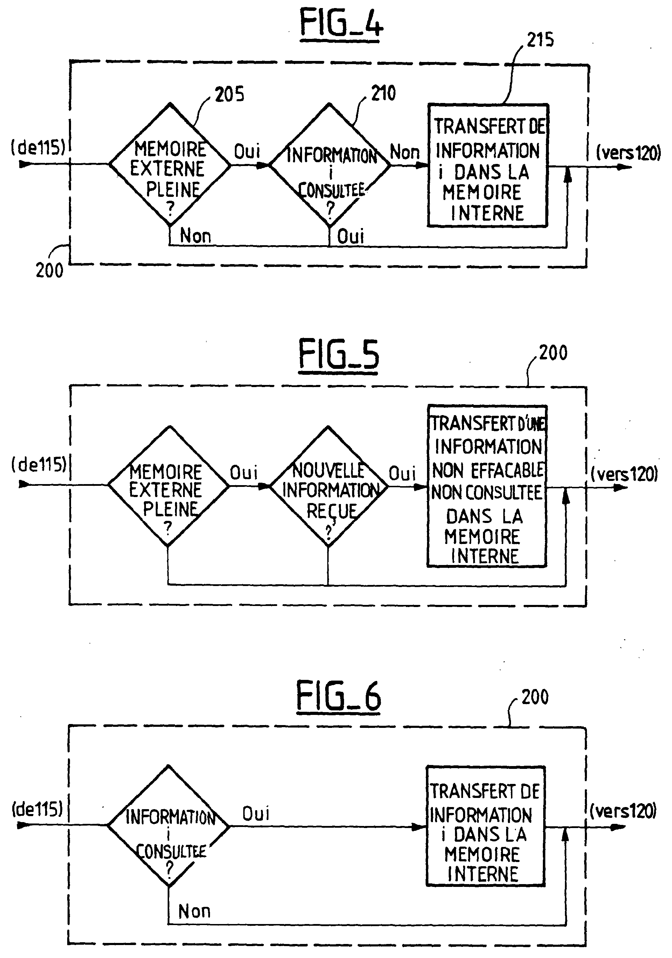

A l'étape 115, on détermine si l'information est de type effaçable
- Si elle est de type effaçable (c'est-à-dire si l'indicateur 20 (figure 2) de l'octet DCS associé à l'information courante a une valeur signifiant « effaçable »), alors on passe à l'étape 130.
- Si elle n'est pas de type effaçable, alors on passe à l'étape 120 dans laquelle on analyse la valeur du compteur i. Une étape optinnelle 200 de traitement des informations non effaçable peut être mise en oeuvre avant l'étape 120. Des modes de réalisation particuliers de cette étape optionnelle 200 seront décrits en référence aux figures 4 à 6. A partir de l'étape 120,
   - Si i = N, alors on passe à l'étape de temporisation 105.
   - Si i < N, alors on incrémente le compteur i d'une unité et on reprend l'étape 115, pour traiter l'information suivante stockée dans la mémoire externe.

A l'étape 130, on détermine si l'information i a été consultée. Par le terme consulter, on entend lire si l'information est un message SMS, écouter si l'information est un fichier audio ou encore visionner si l'information est un fichier vidéo. Après l'étape 130 :
- Si l'information i a été consultée alors on passe à l'étape 135, qui consiste à effacer l'information i. On passe ensuite à l'étape 120.
- Si l'information n'a pas été consultée, alors on passe directement à l'étape 120.

Ainsi, la mémoire est optimisée sans l'intervention de l'utilisateur du terminal. Les informations marquées «effaçable», c'est-à-dire jugées par l'émetteur pas assez importantes pour être gardées après la consultation, sont en effet effacées automatiquement après leur consultation par le terminal de l'utilisateur les ayant reçues.

Bien que le procédé d'optimisation décrit en relation avec la figure 3 fasse référence à une mémoire externe, on comprend que ce procédé s'applique également à l'optimisation d'une mémoire interne d'un terminal de radiocommunication.

De plus, un autre avantage de l'invention est que la donnée représentative du type effaçable de l'information est contenue dans l'un des bits laissé libre de l'octet de type DCS, cet octet étant déjà associé à l'information dans l'état de la technique.

La figure 4 montre un premier mode de réalisation de l'étape optionnelle 200 de gestion des informations non effaçable.

L'étape 200 est mise en oeuvre après l'étape 115 de la figure 3, dans laquelle on a déterminé que l'information i n'est pas de type effaçable.

Dans une première étape 205, on détermine si la mémoire externe est pleine ou non :
- Si la mémoire externe n'est pas pleine, alors on passe à l'étape 120 (figure 3), c'est-à-dire qu'on ne modifie pas la mémorisation de l'information i,
- Si la mémoire externe est pleine, alors on détermine au cours d'une l'étape 210 si l'information i, a été consultée :
   - Si elle a été consultée, alors on passe à l'étape 120 (figure 3),
   - Sinon, on transfère l'information i dans la mémoire interne du terminal par une étape 215, puis on passe à l'étape 120.

Dans ce qui, précède et ce qui suit, on entend par transférer dans une deuxième mémoire le fait de libérer de la place dans une première mémoire et de mémoriser les informations extraites de la première vers la deuxième mémoire.

Le procédé selon la figure 4 permet ainsi de garantir une place libre en mémoire externe, dans la mesure où celle-ci contient au moins une information non effaçable et non consultée.

La figure 5 montre un deuxième mode de réalisation de l'étape optionnelle 200 de gestion des informations non effaçable.

Dans une première étape 220, on détermine si la mémoire externe est pleine ou non :
- Si la mémoire externe n'est pas pleine, alors on passe à l'étape 120 (figure 3), comme dans le mode de réalisation de la figure 4,
- Si la mémoire externe est pleine, alors on passe à l'étape 225 qui consiste à déterminer si une nouvelle information vient d'être reçue:
   - Si aucune nouvelle information n'a été reçue, alors on passe à l'étape 120,
   - Sinon, on transfère la nouvelle information non effaçable non consultée dans la mémoire interne du terminal au cours d'une étape 230 puis on passe à l'étape 120.

Dans le mode de réalisation de la figure 5, on libère une place en mémoire externe, dans la mesure où elle contient une information non effaçable non consultée, lorsqu'une information est nouvellement reçue et que la mémoire externe est pleine.

La figure 6 montre un troisième mode de réalisation de l'étape optionnelle 200 de gestion des informations non effaçable.

Dans le mode de réalisation de la figure 6, on transfère automatiquement toute information non effaçable et consultée dans la mémoire interne, libérant ainsi le maximum de place dans la mémoire externe.

## Revendications

1. Procédé d'optimisation d'une mémoire externe et/ou interne d'un terminal de radiocommunication, dans laquelle est mémorisée au moins une information reçue par ce terminal, à laquelle est associé à demeure au moins un indicateur représentatif du type effaçable de ladite information, **caractérisé en ce que**, pour une information effaçable, l'information est effacée automatiquement en fonction de la consultation de ladite information par l'utilisateur.

2. Procédé, selon la revendication 1, **caractérisé en ce que** l'information est du type SMS.

3. Procédé selon l'une quelconque des revendications **1 à 2,** dans lequel l'information est émise par un utilisateur d'un autre terminal, **caractérisé en ce que** l'étape consistant à associer à demeure un indicateur représentatif d'un état de ladite information, est effectuée par cet utilisateur pour forcer l'effacement automatique de l'information mémorisée dans la mémoire du terminal récepteur après sa consultation par l'utilisateur du terminal récepteur.

4. Procédé selon l'une quelconque des revendications **1 à 2,** dans lequel l'information est émise par un opérateur d'un réseau de radiocommunication, **caractérisé en ce que** l'étape consistant à associer à demeure un indicateur représentatif d'un état de ladite information, est effectuée par l'opérateur pour forcer l'effacement automatique de l'information mémorisée dans la mémoire du terminal après sa consultation par l'utilisateur du terminal.

5. Procédé selon l'une quelconque des revendications précédentes, dans lequel on associe à l'information lors de son émission, un multiplet de type DCS comportant plusieurs bits, **caractérisé en ce que** l'indicateur est formé d'au moins un bit dudit multiplet DCS.

6. Procédé selon la revendication **5**, **caractérisé en ce qu'**on associe à l'information reçue une donnée représentative de l'état de la consultation.

7. Procédé selon la revendication **6**, **caractérisé en ce que** ladite donnée forme une partie du multiplet DCS.

8. Procédé suivant l'une quelconque des revendications, **caractérisé en ce que** la consultation est constituée par la lecture de l'information par l'utilisateur.

9. Procédé selon l'une quelconque des revendications précédentes, le terminal de radiocommunication comportant une mémoire interne et une mémoire externe, **caractérisé en ce que**, si la mémoire externe est pleine, au moins une information non effaçable et qui n'a pas été consultée est transférée automatiquement dans la mémoire interne.

10. Procédé selon l'une quelconque des revendications 1 à 8, le terminal de radiocommunication comportant une mémoire interne et une mémoire externe, **caractérisé en ce que**, si une information est reçue alors que la mémoire externe est pleine, au moins une information non effaçable et qui n'a pas été consultée est transférée automatiquement dans la mémoire interne.

11. Procédé selon l'une quelconque des revendications 1 à 8, le terminal de radiocommunication comportant une mémoire interne et une mémoire externe, **caractérisé en ce que**, toute information non effaçable est automatiquement transférée dans la mémoire interne après qu'elle a été consultée.

12. Terminal de radiocommunication pour la mise en oeuvre du procédé selon la revendication 1, comprenant une mémoire externe et/ou interne, **caractérisé en ce qu'**il comporte des moyens pour identifier un indicateur de type effaçable et des moyens pour effacer automatiquement une information effaçable reçue et mémorisée dans la mémoire du terminal en fonction de la consultation de ladite information par l'utilisateur du terminal.

13. Terminal de radiocommunication selon la revendication 12, dans lequel la mémoire externe est située dans une carte SIM.

14. Terminal de radiocommunication selon les revendications 12 ou 13, **caractérisé en ce qu'**il comporte des moyens pour transférer automatiquement dans la mémoire interne des informations non effaçables lorsque la mémoire externe est pleine.

15. Terminal de radiocommunication selon les revendications 12 ou 13, **caractérisé en ce qu'**il comporte des moyens pour transférer automatiquement dans la mémoire interne une information non effaçable et qui n'a pas été consultée, si une information est reçue alors que la mémoire externe est pleine.

16. Terminal de radiocommunication selon les revendications 12 ou 13, **caractérisé en ce qu'**il comporte des moyens pour transférer automatiquement dans la mémoire interne une information non effaçable après qu'elle a été consultée.
